# EUROPEAN PATENT APPLICATION

(11) **EP 3 479 934 A1**
(43) Date of publication of application: **08.05.2019**
(21) Application number: 18197889.1
(22) Date of filing: 01.10.2018
(51) Int. Cl.: B22F 3/105, B22F 5/00, B22F 5/04, B33Y 40/00, B33Y 10/00, F01D 5/00

(54) **ADDITIVE LAYER MANUFACTURING METHOD COMPRISING FORMING AN ANNULAR SUPPORT STRUCTURE**

(30) Priority: 02.11.2017 GB 201718144
(71) Applicant: Rolls-Royce plc, London SW1E 6AT (GB)
(72) Inventor: Garry, Ian, Derby, Derbyshire DE24 8BJ (GB)
(74) Representative: Rolls-Royce plc

(57) **Abstract**

The present invention provides a method of forming a plurality of components by additive layer manufacturing. The method comprises forming at least one annular support structure joining the plurality of components with the plurality of components being spaced around the circumference of the at least one annular support structure. Concentric inner and outer annular supports may be provided.

## Description

### Field of the Invention

The present invention relates to an additive layer manufacturing method for producing a plurality of components. In particular, this invention relates to an additive layer manufacturing method for reducing residual stress in the resulting components whilst reducing the extent of support structures.

### Background of the Invention

In the aerospace industry, components manufactured by additive layer manufacturing (ALM) methods can have significant performance and weight advantages over components manufactured by more traditional methods.

Powder bed ALM methods construct components layer by layer by depositing powder on a machine bed and then selectively consolidating the powder using a laser or other heat source. These steps are repeated to produce a three dimensional component. In many cases, multiple components are built at the same time on a machine bed to reduce costs.

Components produced using ALM methods inevitably contain inherent residual stresses. To manage and minimise these stresses, support structures are designed to prevent distortion of the component during manufacture. Such support structures are built up layer upon layer along with the component and consequently use a significant portion of the powdered material (often up to around 30%) and laser time. The support structures are subsequently removed from the component and disposed of.

Support structures are especially important for thin, elongated components which are prone to flexing during the ALM manufacture method.

There is a desire to provide a method that minimises residual stresses in components manufactured by ALM methods whilst ameliorating at least some of the problems associated with the known support structures.

### Summary of the Invention

In a first aspect, the present invention provides a method of forming a plurality of components by additive layer manufacturing, said method comprising forming at least one annular support structure joining the plurality of components with the plurality of components being spaced around the circumference of the at least one annular support structure.

By providing an annular support structure connecting the circumferentially spaced components, each component can assist in providing support for its two adjacent components. This combined with the inherent strength of an annular support structure helps minimise residual stresses in the resulting components whilst minimising the volume (and therefore cost) of the support structures.

Optional features of the invention will now be set out. These are applicable singly or in any combination with any aspect of the invention.

In some embodiments, the method comprises forming two or more concentric annular support structures. For example, there may be an inner annular support structure joining the plurality of components with a respective inner portion of each of the plurality of components being spaced around the circumference of the inner annular support structure and an outer annular support structure joining the plurality of components with a respective outer portion of each of the plurality of components being spaced around the circumference of the outer annular support structure.

There may be one or more intermediate annular support structures joining the plurality of components with a respective intermediate portion of each of the plurality of components being spaced around the circumference of the at least one intermediate annular support structure. The provision of a plurality of concentric annular support structures provides greater support to the plurality of components thus further reducing residual stress.

Elongated components such as aerofoils, rotors and stators will have a longitudinal axis (which may be curved) extending from their respective inner portion to their respective outer portion. This longitudinal axis will correspond to the camber line in an aerofoil.

In some embodiments, the method comprises forming each of the plurality of components such that their longitudinal axes extend in a direction substantially aligned with the radius of the at least one annular support (and perpendicular to the vertical build direction). In this way, the components form spokes thus further increasing the stability of the overall arrangement and thus further reducing residual stresses.

In some embodiments, the method comprises forming two or more concentric annular support structures and forming each of the plurality of components such that their longitudinal axes extend radially between the inner and outer annular support structures. The inherent strength of the wheel structure formed by the annular support structures (as rims) and the components (as spokes) helps minimise residual stresses in the resulting components whilst minimising the volume (and therefore cost) of the annular support structures.

The method comprises forming the plurality of components by additive layer manufacturing whilst forming the at least one annular support structure by additive layer manufacturing.

The method may comprise forming the components and at least one annular support structure by additive layer manufacturing using a powder material which may be formed of metal or metal alloy e.g. from nickel, copper, iron, steel, nickel alloys, titanium, titanium alloys, magnesium, magnesium alloys, aluminium, aluminium alloys, vanadium, zirconium, hafnium, or refractory metals such as niobium, molybdenum, tantalum, tungsten and rhenium. The powder material may be ceramic, metallic-ceramic combination or metal matrix composite e.g. from zirconium, yttria or silicon carbide.

The powder material is deposited on the machine bed and consolidated using an energy beam such as a laser or electron beam. This step is repeated multiple times to form the plurality of three dimensional components and the at least one annular support structure, layer upon layer, the layers being stacked vertically in the build direction. Accordingly, the or each annular support structure will have a vertical dimension.

In some embodiments, the method comprises forming the annular support structure or at least one of the plurality of annular support structures with a constant diameter between each layer. Accordingly, the or each annular support structure will have a cylindrical three dimensional shape.

In some embodiments, the cylindrical annular support structure or at least one of the plurality of annular support structures may comprise voids or recesses such that it is an aperture or latticed cylinder or has an apertured or latticed portion, the voids/recesses formed by leaving areas of the powder material unconsolidated in the region of the annular support structure/at least one of the plurality of annular support structures.

In some embodiments, the method may comprises forming the or at least one of the plurality of annular/cylindrical support structures with a plurality of support blocks spaced around the circumference of the support structure, each support block for supporting a portion of one of the plurality of components. The plurality of supports blocks may be formed at a lower vertical end (i.e. the end proximal the machine bed). This is useful where the component has a variation in vertical height along its longitudinal axis. For example, the outer annular support structure may be provided with a plurality of support blocks spaced its circumference, each block for supporting the outer portion (e.g. the outer end) of one of the components. The support blocks on the outer annular support may be formed at the lower vertical end and on an outer surface of the outer annular support. This is useful where the component has a smaller vertical height at its outer portion than its inner portion. The support blocks provide a base from which the component can subsequently be grown. The support blocks are formed by additive layer manufacturing using a powder material prior to forming the components and at least one annular support structure.

In some embodiments, the method may further comprise forming a location feature for machine location during subsequent batch processing of the plurality of components. For example, the location feature may be used to hold the plurality of components (e.g. by a robot) to facilitate removal of excess powder or to facilitate removal of the base plate on which the plurality of components are formed. The location feature may be provided at the centre of the arrangement i.e. along the central axis annular support structure(s) or may be provided externally of the annular support structure(s).

In some embodiments, the plurality of components may comprise, by way of example, a plurality of combustion tiles, vanes, blades or seal segments for a gas turbine engine.

### Brief Description of the Drawings

Embodiments of the invention will now be described by way of example with reference to the accompanying drawings in which:
Figure 1 shows a top view of an arrangement of a plurality of components and two annular support rings formed according to a first embodiment of the present invention; and
Figure 2 shows a perspective view of the Figure 1 arrangement.

### Detailed Description and Further Optional Features of the Invention

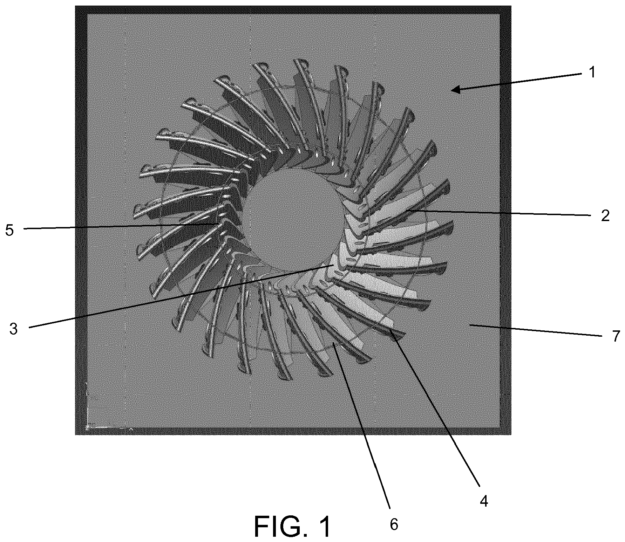

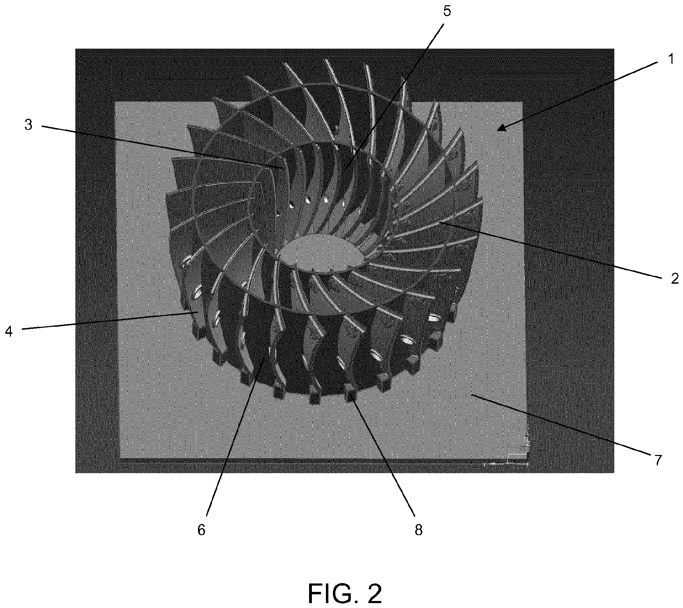

Figures 1 and 2 show an arrangement 1 comprising a plurality of components (combustion tiles) 2, each component having an inner portion 3 and an outer portion 4 with a respective longitudinal axis extending therebetween.

The arrangement 1 further comprises concentric inner annular support 5 and outer annular support 6.

The inner portions 3 of the components 2 are joined together by and spaced around the circumference of the inner annular support structure 5. The outer portions 4 of the components 2 are joined together by and spaced around the circumference of the outer annular support structure 6.

The longitudinal axes of the components 2 each extend between the inner and outer annular supports 5, 6 in a respective direction aligned with the radii of the inner and outer annular supports 5, 6.

The components 2 and annular support structures 5, 6 are built up on a machine bed/base plate 7 layer upon layer by additive layer manufacturing methods. A layer of powder material is deposited on the material bed and is subsequently fused/melted using a scanning laser beam to form a layer of the components 2 and the annular support structures 5, 6.

This step is repeated multiple times to form the three dimensional components 2 and the annular support structures 5, 6 layer upon layer, the layers being stacked vertically in the build direction. As can be seen in Figure 2, this results in the annular support structures 5, 6 having a cylindrical three dimensional profile.

As can also be seen in Figure 2, the outer surface of the outer annular support structure 6 is provided with a plurality of support blocks 8 adjacent the machine bed/base plate 7 to support the outer portions 4 of the components 2 which have a greater vertical height at their inner portions 3 than their outer portions 4.

By providing annular support structures 5, 6 connecting the circumferentially spaced components 2, each component can assist in providing support for its two adjacent components. This combined with the inherent strength of the wheel structure formed by the annular support structures 5, 6 (as rims) and the components 2 (as spokes) helps minimise residual stresses in the resulting components whilst minimising the volume (and therefore cost) of the annular support structures 5, 6.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

All references referred to above are hereby incorporated by reference.

## Claims

1. A method of forming a plurality of components (2) by additive layer manufacturing, said method comprising forming at least one annular support structure (5, 6) joining the plurality of components with the plurality of components being spaced around the circumference of the at least one annular support structure.

2. A method according to claim 1 wherein each component has a longitudinal axis and the method comprises forming each of the plurality of components such that their longitudinal axes extend in a direction aligned with the radius of the at least one annular support

3. A method according to claim 1 or 2 comprising forming two or more concentric annular support structures.

4. A method according to claim 3 comprising forming an inner annular support structure joining the plurality of components with a respective inner portion (3) of each of the plurality of components being spaced around the circumference of the inner annular support structure and an outer annular support structure joining the plurality of components with a respective outer portion (4) of each of the plurality of components being spaced around the circumference of the outer annular support structure.

5. A method according to claim 4 further comprising forming one or more intermediate annular support structures joining the plurality of components with a respective intermediate portion of each of the plurality of components being spaced around the circumference of the at least one intermediate annular support structure.

6. A method according to any one of claims 3 to 5 wherein each component has a longitudinal axis and the method comprises forming each of the plurality of components such that their longitudinal axes extend radially between the inner and outer annular support structures.

7. A method according to any one of the preceding claims comprising forming the annular support structure or at least one of the plurality of annular support structures with a constant diameter.

8. A method according to claim 7 comprising forming the annular support structure or at least one of the plurality of annular support structures as a cylinder.

9. A method according to any one of the preceding claims comprising forming the or at least one of the plurality of annular support structures with a plurality of support blocks (8) spaced around the circumference of the support structure, each support block for supporting a portion of one of the plurality of components.

10. A method according to any one of the preceding claims further comprising forming a location feature for machine location during subsequent batch processing of the plurality of components.
